# EUROPEAN PATENT SPECIFICATION

(11) **EP 0 983 575 B1**
(45) Date of publication and mention of the grant of the patent: **02.07.2003**
(21) Application number: 98917918.9
(22) Date of filing: 20.04.1998
(51) Int. Cl.: G06T 15/70

(54) **IMPROVEMENTS IN, OR RELATING TO, VISUAL SPEECH SYNTHESIS**
VERBESSERUNGEN IM BEZUG AUF VISUELLE SPRACHSYNTHESE
AMELIORATIONS CONCERNANT LA SYNTHESE VOCALE VISUELLE

(30) Priority: 27.05.1997 SE 9701977
(43) Date of publication of application: 08.03.2000
(73) Proprietor: TELIA AB, 123 86 Farsta (SE)
(72) Inventor: LJUNGQVIST, Mats, 2920 Luxemburg (LU)
(74) Representative: Akerman, Marten Lennart
(86) International application number: SE9800710
(87) International publication number: WO98054696

(56) References cited:
- EP-A- 0 710 929
- EP-A- 0 778 560
- US-A- 5 482 048
- US-A- 5 621 858
- US-A- 5 657 426
- INTERNATIONAL CONFERENCE ON ACOUSTICS, SPEECH AND SIGNAL ..., Volume 3, May 1989, MORISHIMA et al., "An Intelligent Facial Image Coding Driven by Speech and Phoneme", pages 1795-1798.

## Description

The invention relates to visual speech synthesis and, in particular, to a method and apparatus for providing real-time visual representations of a speaker's facial movements, associated with an acoustic speech signal.

In essence, speech production is based on the basic mechanisms of:
- phonation which is related to the vibration of the vocal cords; and
- vocal articulation which is related to the time-varying geometry of the vocal tract responsible for the phonemic structure of speech.

When a person causes his/her diaphragm to be forced upwards, air is expelled from the lungs and flows into the trachea, glottis (the gap between the two vocal cords) and larynx before reaching the upper part of the vocal tube, called the vocal tract, which is formed by the pharynx, nasal and oral concavities. The periodical closure of the glottis interrupts the air flow, generating a variation of the air pressure whose frequency can be raised to the acoustic range. The harmonic components of this acoustic wave, which are multiples of the fundamental (i.e. pitch) frequency, are then modified as long as the air flows through the vocal tract. The nature of the modification is dependent on the geometry of the vocal tract. The shape of the vocal tract can, in fact, be varied by moving the jaw, tongue. lips and velum (palate). This mechanism enables the vocal tract to implement a time-varying system, having the capability to filter the incoming acoustic wave, reshaping its spectrum and modifying the produced sound.

Speech is the concatenation of elementary units, called phones, generally classified as:
- vowels, when they correspond to a stable configuration of the vocal tract; or alternatively,
- as consonants, when they correspond to transient articulatory movements.

Each phone can then be characterized by means of a few attributes (i.e. open/closed, front/back, oral/nasal and rounded/unrounded), which qualify the articulation manner (i.e. fricative, like /f/, /s/; plosive, like /b/, /p/; nasal, like /n/. /m/;...) and articulation place (i.e. labial, dental. alveolar, palatal, glottal).

Some phones, like vowels and a subset of consonants, are accompanied by vocal cord vibration and are called "voiced" phones, while other phones, like plosive consonants, are totally independent of vocal cord vibration and are called "unvoiced" phones. With voiced phones, the speech spectrum is shaped, as previously described, in accordance with the geometry of the vocal tract, with characteristic energy concentrations around three main peaks called "formants", located at increasing frequencies, F1, F2 and F3.

An observer skilled in lip reading is able to estimate the likely locations of formant peaks by computing the transfer function from the configuration of the visible articulators. This computation is performed through an estimation of four basic parameters, namely:
(i) the length of the vocal tract, L;
(ii) the distance, d, between the glottis and the place of maximum constriction;
(iii) the radius, r, of the constriction; and
(iv} the ratio between the area, A, of the constriction and the length, L, of the vocal tract.

While the length, L, of the vocal tract can, a priori, be estimated, taking into account the sex and age of the speaker, the other parameters can be inferred (roughly) from the visible configuration. If the maximum constriction is located in correspondence of the mouth, thus involving lips, tongue and teeth, as is the case for labial and dental phones, the estimation is usually reliable. In contrast, when the maximum constriction is non-visible, such as in velar phones (/k/, /g/), the estimation is usually very poor.

Lip reading represents the highest synthesis of human expertise in converting visual inputs into words and then into meanings. It consists of a personal database of knowledge and skills constructed and refined by training, having the capability to associate virtual sounds to specific mouth shapes, generally called "viseme", and thereby infer the underlying acoustic message. The lip reader's attention is basically focused on the mouth, including all its components, i.e lips, teeth and tongue, but significant help, in a lip reader's comprehension, also comes from the entire facial expression of the speaker.

In lip reading, a significant amount of processing is performed by the lip reader, himself, who is skilled in post-filtering the converted message, to recover from errors and from communication lags. It is possible, through linguistic and semantic reasoning, to exploit message redundancy and obtain an understanding from the context of the message. This kind of knowledge-based interpretation is performed by the lip reader in real-time.

Audio-visual speech perception and lip reading rely on two perceptual systems, working in cooperation, so that, in the case of hearing impairments, the visual modality can efficiently integrate, or even substitute for, the auditory modality. It has been demonstrated experimentally that exploitation of visual information, associated with the movements of a speaker's lips, improves the comprehension of speech; with these experiments, the Signal-to-Noise Ratio (SNR) is incremented up to 15 dB and auditory failure is, in most of cases, transformed into near-perfect visual comprehension. The visual analysis of the speaker's face provides different levels of information to the observer, improving the discrimination of signal from noise. The opening/closing of the lips is, in fact, strongly correlated to the power of the speech signal and provides useful indications concerning the manner in which the speech stream is segmented. Whilst vowels can be recognized rather easily, both through hearing and vision, consonants are conversely very sensitive to noise and visual analysis often represents the only way for successful comprehension. The acoustic cues, associated with consonants, are usually characterized by low intensity, a very short duration, and fine speech patterning.

It has been shown (see B. Dodd, R. Campbell, "Hearing by eye: the psychology of lipreading", Lawrence Erlbaum Ass. Publ., particularly, Figure B.1: Auditory confusion of consonant transitions, CV, in white noise with decreasing Signal to Noise Ratio expressed in dB, and Figure B.2: Visual confusion of consonant transitions, CV, in white noise among adult hearing impaired persons) in relation to auditory confusion, that cues of nasality and voicing are efficiently discriminated, through acoustic analysis, differently from place cues, which are easily distorted by noise (see Figure B. 1 of Dodd et al).

The opposite situation occurs in the visual domain (see Figure B.2 of Dodd et al), where place is recognized far more easily than voicing and nasality. By decreasing the Signal to Noise Ratio, consonants, which are initially discriminated, are progressively confused and clustered. When the 11^{th} cluster is formed (dashed line of Figure B.2 of Dodd et al), the resulting 9 groups of consonants can be considered as distinct visemes.

Place cues are, in fact, associated with mid-high frequencies, i.e. above 1 kHz, which are usually scarcely discriminated in most of the hearing disorders. However, nasality and voicing reside in the lower part of the frequency spectrum. Moreover, place cues are characterized by a short-time, fine spectral structure, requiring high frequency and temporal resolution, whereas voicing and nasality cues are mostly associated with unstructured power distribution over several tens of milliseconds.

In any case, observing the face of a speaker is evidently of great advantage to speech comprehension and almost necessary in the presence of noise, or hearing impairments, i.e. vision directs the auditor's attention, adds redundancy to the signal and provides evidence of those cues which would be irreversibly masked by noise.

It is known that, in normal verbal communication, analysis and comprehension of the various articulation movements relies on a bimodal perceptive mechanism for the continuous integration of coherent visual and acoustic stimuli. In the case of impairments in the acoustic channel, due to distance, noisy environments, transport barriers (for example, a pane of glass), or pathologies, the prevalent perceptive task is consequently performed through the visual modality. In this case, only the movement and the expressions of the visual articulatory organs are exploited for comprehension, i.e. the vertical and horizontal opening of the speakers lips, vertical jaw displacement, teeth visibility, tongue position and other minor indicators, such as, inflation of the speaker's cheeks and nose contractions.

It is known, from the results of experimental phonetics, that hearing impaired people behave differently from normal hearing people in lip reading. In particular, visemes, such as, bilabial /b, p, m/, fricative /f, v/, and occlusive consonants /t, d/ are recognized by both hearing impaired people and people having normal hearing, whereas other visemes, such as, /k, g/, are recognized only by hearing impaired people. The occurrence of correct recognition for each viseme is also different between normal and hearing impaired people. For example, hearing impaired people are much more successfully than normal hearing people in recognizing nasal consonants /m, n/. These two specific differences in phoneme recognition is difficult to explain because velum, which is the primary articulator involved in phonemes, such as, /k, g/, or /m, n/, is not visible and its movements cannot be perceived in lip reading. A possible explanation, stemming from recent results in experimental phonetics, relies on the exploitation of secondary articulation indicators commonly unnoticed by the normal observer.

It is an object of the present invention to provide a method and apparatus for providing real-time visual representations of a speaker's facial movements, associated with an acoustic speech signal.

It is another object of the present invention to provide a telecommunication system including an apparatus for providing real-time visual representations of a speaker's facial movements, associated with an acoustic speech signal, to facilitate an enhanced understanding of acoustic speech signals for users of the system who have impaired hearing and a lip reading skill.

According to a first aspect of the present invention, there is provided, a method for providing real-time visual representations of a speaker's facial movements, associated with an acoustic speech signal delivered by the speaker, including the steps of analyzing the acoustic speech signal to identify its constituent elemental speech units; generating and displaying, on a display screen, an image of moving human facial features, said facial feature movements being substantially synchronized, in real time, to said constituent elemental speech units; said method being characterised by the step of displaying, on the display screen, a series of movement patterns for respective constituent elemental units of the acoustic speech signal, each of said movement patterns being indicative of movement, in three-dimensions, of a number of points around the mouth of the speaker, and substantially synchronized, in real time, to a respective constituent elemental speech unit.

According to a second aspect of the present invention, there is provided, a method for providing real-time visual representations of a speaker's facial movements, associated with an acoustic speech signal delivered by the speaker, including the steps of analyzing the acoustic speech signal to identify its constituent elemental speech units; generating and displaying, on a display screen, an image of moving human facial features, said facial feature movements being substantially synchronized, in real time, to said constituent elemental speech units; said method being characterised by the steps of generating and storing a series of facial movement patterns for the constituent elemental units of acoustic speech signals for display on the display screen, each of said movement patterns being indicative of movement, in three-dimensions, of a number of points around the mouth of a speaker for a respective constituent elemental speech unit.

The methods outlined in preceding paragraphs, may include the step of retrieving, in response to the identification of each of the constituent elemental units of the acoustic speech signal delivered by the speaker, a respective stored movement pattern for display.

The facial features around the mouth may include the region around the lips, cheeks and nose, and the number of points around the mouth may amount to at least ten points.

In a preferred method of the present invention, generation of the series of facial movement patterns may include the steps of storing a visual representation of human facial features, including at least the mouth, together with information indicative of a normal position of a number of points around the mouth; analyzing acoustic speech signals to identify the related acoustic parameters that define said constituent elemental speech units; making three-dimensional measurements, at each of said number of points around the mouth of a speaker, for each of the identified acoustic parameters; comparing, for each of said acoustic parameters, the measured and normal positions for each of said number of points around the mouth to determine a positional difference, in three-dimensions, at each of said number of points for a respective acoustic parameter; establishing a movement pattern for said number of points around the mouth for each of said acoustic parameters, said movement pattern being a transformation from said acoustic parameters to the differences, in three-dimensions, between the measured and normal positions of each of said number of points; and storing the movement patterns for each of said acoustic parameters. The transformation may be a linear function which describes a difference for a measurement point as a function of acoustic parameters. Also, the acoustic parameters may be statistically estimated from known data using multiple linear regression techniques.

The constituent elemental units resulting from analysis of said acoustic speech signal(s) may be in the form of a series of phones representative of vowels and consonants.

In accordance with the method of the present invention the acoustic parameters may be estimated every 20 milliseconds (50 Hz).

According to a third aspect of the present invention, there is provided, a method for providing real-time visual representations of a speaker's facial movements, associated with an acoustic speech signal, in which the acoustic speech signal is analyzed to identify its constituent elemental units of speech, in which the speaker's facial movements, associated with each of said constituent elemental speech units, are measured, said analysis and facial measurements being synchronized, in time, and used to synthesize the visual representations of the speaker's facial movements, and in which the synthesized visual representations are displayed, for viewing by a person to whom the acoustic speech signal is addressed, contemporaneously with receipt, by that person, of the respective constituent elemental speech units, characterised in that said method includes the steps of storing a visual representation of human facial features, including at least the mouth, together with information indicative of a normal position of a number of points around the mouth; analyzing the acoustic speech signal to identify the related acoustic parameters that define said constituent elemental speech units; during the acoustic speech signal analysis, making three-dimensional measurements, at each of said number of points around the mouth of the speaker, for each of the identified acoustic parameters; comparing, for each of said acoustic parameters, the measured and normal positions for each of said number of points around the mouth to determine a positional difference, in three-dimensions, at each of said number of points for a respective acoustic parameter; establishing a movement pattern for said number of points around the mouth for each of said acoustic parameters, said movement pattern being a transformation from said acoustic parameters to the differences, in three-dimensions, between the measured and normal positions of each of said number of points; transmitting the resulting movement patterns, to a recipient, at the same time as, and in synchronism with, the respective constituent elemental speech units; and displaying the movement patterns of the mouth on said display unit in synchronism with receipt, by the recipient, of respective constituent elemental units of the acoustic speech signal.

According to a fourth aspect of the present invention, there is provided, apparatus for providing real-time visual representations of a speaker's facial movements, associated with an acoustic speech signal delivered by the speaker, including a display unit for displaying said visual representations; means for analyzing the acoustic speech signal to identify its constituent elemental speech units; generation means for generating and displaying, on said display unit, an image of moving human facial features, said facial feature movements being substantially synchronized, in real time, to said constituent elemental speech units, characterised in that said apparatus is adapted to displaying, on the display screen, a series of movement patterns for respective constituent elemental units of the acoustic speech signal, each of said movement patterns being indicative of movement, in three-dimensions, of a number of points around the mouth of the speaker and substantially synchronized, in real time, to a respective constituent elemental speech unit.

According to a fifth aspect of the present invention, there is provided, apparatus for providing real-time visual representations of a speaker's facial movements, associated with an acoustic speech signal delivered by the speaker, including a display unit for displaying said visual representations; means for analyzing the acoustic speech signal to identify its constituent elemental speech units; generation means for generating and displaying, on said display unit, an image of moving human facial features, said facial feature movements being substantially synchronized, in real time, to said constituent elemental speech units, characterised in that said generation means include means for generating a series of facial movement patterns for the constituent elemental units of acoustic speech signals for display on the screen, each of said movement patterns being indicative of movement, in three-dimensions, of a number of points around the mouth of a speaker for a respective constituent elemental speech unit, and in that said apparatus includes storage means for storing said series of facial movement patterns.

The apparatus of the present invention may include retrieval means, responsive to the identification of each of the constituent elemental units of the acoustic speech signal delivered by the speaker, to retrieve a respective stored movement pattern for display on said display unit.

With the apparatus of the present invention, the facial features around the mouth may include the region around the lips, cheeks and nose, and the number of points around the mouth may amount to at least ten points.

The generation means may include storage means for storing a visual representation of human facial features, including at least the mouth, together with information indicative of a normal position of a number of points around the mouth; analyzing means for analyzing acoustic speech signals to identify the related acoustic parameters that define said constituent elemental speech units; measurement means for making three-dimensional measurements, at each of said number of points around the mouth of a speaker, for each of the identified acoustic parameters; comparison means for comparing, for each of said acoustic parameters, the measured and normal positions for each of said number of points around the mouth to determine a positional difference, in three-dimensions, at each of said number of points for a respective acoustic parameter; and transformation means for establishing a movement pattern for said number of points around the mouth for each of said acoustic parameters, said movement pattern being a transformation from said acoustic parameters to the differences, in three-dimensions, between the measured and normal positions of each of said number of points.

The transformations established by the transformation means may be a linear function which describes a difference for a measured point as a function of acoustic parameters, and the analyzing means may be adapted to statistically estimate the acoustic parameters from known data using multiple linear regression techniques.

The constituent elemental speech units resulting from analysis of the acoustic speech signal(s) may be in the form of a series of phones representative of vowels and consonants, and the acoustic parameters may be estimated every 20 milliseconds (50 Hz).

According to a sixth aspect of the present invention, there is provided, apparatus for providing real-time visual representations of a speaker's facial movements, associated with an acoustic speech signal including a display unit for displaying the visual representations; analyzing means for analyzing the acoustic speech signal to identify its constituent elemental units of speech; measurement means for measuring the speaker's facial movements, associated with each of said constituent elemental speech units, said facial measurements and speech signal analysis being synchronized, in time; means for synthesizing the visual representations of the speaker's facial movements, said synthesized visual representations being displayed, on said display unit, for viewing by a person to whom the acoustic speech signal is addressed, contemporaneously with receipt, by that person, of the respective constituent elemental speech units, characterised in that said apparatus includes storage means for storing a visual representation of human facial features, including at least the mouth, together with information indicative of a normal position of a number of points around the mouth; analyzing means for analyzing the acoustic speech signal to identify the related acoustic parameters that define said constituent elemental speech units: measurement means for making, during the acoustic speech signal analysis, three-dimensional measurements, at each of said number of points around the mouth of the speaker, for each of the identified acoustic parameters; comparison means for comparing, for each of said acoustic parameters, the measured and normal positions for each of said number of points around the mouth to determine a positional difference, in three-dimensions, at each of said number of points for a respective acoustic parameter; transformation means for establishing a movement pattern for said number of points around the mouth for each of said acoustic parameters, said movement pattern being a transformation from said acoustic parameters to the differences, in three-dimensions, between the measured and normal positions of each of said number of points; and transmitting means for transmitting the resulting movement patterns, to a recipient, at the same time as, and in synchronism with, the respective constituent elemental speech units; and in that said apparatus is adapted to display movement patterns of the mouth on said display unit in synchronism with receipt, by the recipient, of respective constituent elemental units of the acoustic speech signal.

According to a seventh aspect of the present invention, there is provided, apparatus for providing real-time visual representations of a speaker's facial movements, associated with an acoustic speech signal delivered by the speaker, in accordance with the method as outlined in preceding paragraphs.

According to an eighth aspect of the present invention, there is provided, a telecommunication system including a plurality a telephone handsets and switching means adapted to interconnect any two, or more, of said telephone handsets, characterised in that said system includes apparatus, as outlined in preceding paragraphs, for providing an enhanced understanding of acoustic speech signals for users of said telephone handsets who have impaired hearing and a lip reading skill. Each of said telephone handsets may be adapted to be connected to, or be integral with, said apparatus, the display unit of the apparatus is adapted to display facial movement patterns in synchronism with receipt of respective constituent elemental units of an acoustic speech signal received by a respective telephone handset, and the facial movement display enables a handset user to comprehend a substantial part of the content of said acoustic speech signal through lid reading of the facial movements.

The foregoing and other features according to the present invention will be better understood from the following description of specific embodiments of the invention.

In accordance with the method and apparatus of the present invention, a lip readable visual synthetic output is provided through the automatic analysis of continuous speech, close attention being paid to the definition of suitable indicators, having the capability to describe the visually relevant articulation places, such as, labial, dental and alveolar, with the least possible residual of ambiguity. It will be seen from subsequent description that the methodology of the present invention provides real-time visual representations of a speaker's facial movements, associated with an acoustic speech signal, around the mouth of the speaker, i.e. the analysis-synthesis facial region is the region around the lips, including the cheeks and nose.

Thus, with the method and apparatus of the present invention, facial movements, emanating from an acoustic speech signal, are controlled at a number of points around the mouth, and advanced calculations are made of speech-facial movement transformations, i.e. transformations from acoustic speech parameters to facial movement parameters.

Known methods and apparatus for the provision of real-time visual representations of a speaker's facial movements, associated with an acoustic speech signal delivered by the speaker, normally involve analysis of the acoustic speech signal to identify its constituent elemental units, and the generation and display, on a display screen, of an image of moving human facial features. The displayed facial feature movements are substantially synchronized, in real time, to the constituent elemental speech units.

In accordance with the method and apparatus of the present invention, a series of facial movement patterns for the constituent elemental units of acoustic speech signals are generated and stored. These facial movement patterns are indicative of movement, in three-dimensions, of a number of points, for example, at least ten points, around the mouth of a speaker. The facial features around the speaker's mouth, for which the movement patterns are generated and stored, preferably include the region around the lips, cheeks and nose.

The generation of the series of facial movement patterns is preferably effected, in accordance with the present invention, by firstly storing a visual representation of human facial features including at least the mouth, in its normal state, together with information indicative of a normal position of a number of points, for example, at least ten points, around the mouth which, as previously stated, preferably includes the region around the lips, cheeks and nose.

The next stage of the movement pattern generation process is to undertake an analysis of acoustic speech signals to identify the related acoustic parameters that define the constituent elemental speech units and to make three-dimensional measurements, at each of the number of points around the mouth of a speaker, for each of the identified acoustic parameters.

The acoustic parameters may, for example, be estimated statistically from known data using multiple linear regression techniques.

As previously stated, speech is the concatenation of elementary units, called phones, generally classified as:
- vowels, when they correspond to a stable configuration of the vocal tract; or alternatively,
- as consonants, when they correspond to transient articulatory movements.

Each phone can, as previously stated, be characterized by means of a few attributes (i.e. open/closed, front/back, oral/nasal and rounded/unrounded), which qualify the articulation manner (i.e. fricative, like /f/, /s/; plosive, like /b/, /p/; nasal, like /n/, /m/;...) and articulation place (i.e. labial, dental. alveolar, palatal, glottal). Some phones, like vowels and a subset of consonants, are accompanied by vocal cord vibration and are called "voiced" phones, while other phones, like plosive consonants, are totally independent of vocal cord vibration and are called "unvoiced" phones. When voiced phones, the speech spectrum is shaped, as previously described, in accordance with the geometry of the vocal tract, with characteristic energy concentrations around three main peaks called "formants", located at increasing frequencies, F1, F2 and F3.

Furthermore, an observer skilled in lip reading is, as previously stated, able to estimate the likely locations of formant peaks by computing the transfer function from the configuration of the visible articulators.

Thus, in accordance with the present invention, the constituent elemental speech units resulting from analysis of the acoustic speech signals may be in the form of a series of phones representative of vowels and consonants.

At the next stage of the movement pattern generation process, three-dimensional measurements are made at each of the number of points around the mouth of the speaker for each of the identified acoustic parameters. The measured and normal positions for each of the number of points around the mouth are then compared for each of the acoustic parameters in order to determine a positional difference, in three-dimensions, at each of the number of points for a respective acoustic parameter. A movement pattern is then established for the number of points around the mouth for each of the accustic parameters. The resulting movement patterns are each a transformation from the acoustic parameters to the differences, in three-dimensions, between the measured and normal positions of each of the number of points around the mouth. The transformation may, for example, be a linear function which describes a difference for a measurement point as a function of acoustic parameters.

The facial movement patterns for each of the acoustic parameters are then stored for subsequent use in the synthesis and display of facial movements associated with an acoustic speech signal.

Thus, in response to the identification of each of the constituent elemental units of the acoustic speech signal, delivered by the speaker, a respective stored facial movement pattern is retrieved and displayed, on a display screen, for viewing by a recipient of the speech signal. The acoustic parameters that define the constituent elemental speech units may, for example, be estimated every 20 milliseconds (50 Hz). The display screen will, therefore, provide a real-time visual representation of the speaker's facial features substantially synchronized, in real-time, with the constituent elemental units of the acoustic speech signal. This display will enable a person, having impaired hearing and a lip reading capability, to obtain an enhanced understanding of the acoustic speech signal.

Whilst the method and apparatus of the present invention could be used in a number of application, which will be directly evident to persons skilled in the art, a particular application for the present invention is in a telecommunication system having subscribers with impaired hearing and a lip reading capability.

Thus, in a telecommunication system including a plurality a telephone handsets and switching means adapted to interconnect any two, or more, of the telephone handsets, the present invention enables users of the telephone handsets, who have impaired hearing and a lip reading skill, to obtain an enhanced understanding of acoustic speech signals through viewing the displayed real-time visual representations of a speaker's facial movements whilst listening to the acoustic speech signal. In other words, the display unit of the apparatus would be adapted to display facial movement patterns in synchronism with receipt of respective constituent elemental units of an acoustic speech signal received by a respective telephone handset, and the facial movement display would enable a handset user to comprehend a substantial part of the content of the acoustic speech signal through lid reading of the facial movements.

With such a telecommunication system, each telephone handset could, for example, be adapted to be connected to, or be integral with, the apparatus of the present invention.

Whilst a video telephone system would enable a hearing impaired subscriber, having a lip reading capability, to obtain an enhanced understanding of an acoustic speech signal, a conventional telephone system, incorporating the apparatus of the present invention, or operating in accordance with the method of the present invention, is more cost effective and uses considerably less bandwidth than a video telephone system.

However, the method and apparatus of the present invention could be adapted for use in a telecommunication system by using real-time visual images of the speaker's facial movements instead of the stored representations. The bandwidth requirements of such a telecommunication system would be greater that a conventional telephone system but less than a conventional video telephone system.

In order to realize such an arrangement, the method of the present invention for providing real-time visual representations of a speaker's facial movements, associated with an acoustic speech signal, includes the steps of storing a visual representation of human facial features, including at least the mouth, in a normal state, together with information indicative of a normal position of a number of points, for example, ten points, around the mouth, and analyzing the acoustic speech signal to identify the related acoustic parameters that define the constituent elemental speech units. During acoustic speech signal analysis, three-dimensional measurements would be made, at each of the number of points around the mouth of the speaker, for each of the identified acoustic parameters. These measurements may, for example, be made every 20 milliseconds (50 Hz). The next step of the method involves comparing, for each of the identified acoustic parameters, the measured and normal positions for each of the number of points around the mouth to determine a positional difference, in three-dimensions, at each of the number of points for a respective acoustic parameter, in order to establish a movement pattern for the number of points around the mouth for each of said acoustic parameters. As before, the movement pattern is a transformation from the acoustic parameters to the differences, in three-dimensions, between the measured and normal positions of each of the number of points around the mouth. The resulting movement patterns are transmitted at the same time as, and in synchronism with, the respective constituent elemental speech units. The movement patterns are then displayed on a display unit in synchronism with receipt, by a listener, of the respective constituent elemental units of the acoustic speech signal.

## Claims

1. A method for providing real-time visual representations of a speaker's facial movements, associated with an acoustic speech signal delivered by the speaker, including the steps of:
- analyzing the acoustic speech signal to identify its constituent elemental speech units;
- generating and displaying, on a display screen, an image of moving human facial features, said facial feature movements being substantially synchronized, in real time, to said constituent elemental speech units;
said method being **characterised by** the step of displaying, on the display screen, a series of movement patterns-for respective constituent elemental units of the acoustic speech signal, each of said movement patterns being:
- indicative of movement, in three-dimensions, of a number of points around the mouth of the speaker; and
- substantially synchronized, in real time, to a respective constituent elemental speech unit, and the step of retrieving, in response to the identification of each of the constituent elemental units of the acoustic speech signal delivered by the speaker, a respective stored movement pattern for display, the generation of said series of facial movement patterns includes the steps of:
- storing a visual representation of human facial features, including at least the mouth, together with information indicative of a normal position of a number of points around the mouth;
- analyzing acoustic speech signals to identify the related acoustic parameters that define said constituent elemental speech units;
- making three-dimensional measurements, at each of said number of points around the mouth of a speaker, for each of the identified acoustic parameters;
- comparing, for each of said acoustic parameters, the measured and normal positions for each of said number of points around the mouth to determine a positional difference, in three-dimensions, at each of said number of points for a respective acoustic parameter;
- establishing a movement pattern for said number of points around the mouth for each of said acoustic parameters, said movement pattern being a transformation from said acoustic parameters to the differences, in three-dimensions, between the measured and normal positions of each of said number of points; and
- storing the movement patterns for each of said acoustic parameters.

2. A method for providing real-time visual representations of a speaker's facial movements, associated with an acoustic speech signal delivered by the speaker, including the steps of:
- analyzing the acoustic speech signal to identify its constituent elemental speech units;
- generating and displaying, on a display screen, an image of moving human facial features, said facial feature movements being substantially synchronized, in real time, to said constituent elemental speech units;
said method being **characterised by** the steps of generating and storing a series of facial movement patterns for the constituent elemental units of acoustic speech signals for display on the display screen, each of said movement patterns being indicative of movement, in three-dimensions, of a number of points around the mouth of a speaker for a respective constituent elemental speech unit, and the step of retrieving, in response to the identification of each of the constituent elemental units of the acoustic speech signal delivered by the speaker, a respective stored movement pattern for display, the generation of said series of facial movement patterns includes the steps of:
- storing a visual representation of human facial features, including at least the mouth, together with information indicative of a normal position of a number of points around the mouth;
- analyzing acoustic speech signals to identify the related acoustic parameters that define said constituent elemental speech units;
- making three-dimensional measurements, at each of said number of points around the mouth of a speaker, for each of the identified acoustic parameters;
- comparing, for each of said acoustic parameters, the measured and normal positions for each of said number of points around the mouth to determine a positional difference, in three-dimensions, at each of said number of points for a respective acoustic parameter;
- establishing a movement pattern for said number of points around the mouth for each of said acoustic parameters, said movement pattern being a transformation from said acoustic parameters to the differences, in three-dimensions, between the measured and normal positions of each of said number of points; and
- storing the movement patterns for each of said acoustic parameters.

3. A method as claimed in any preceding claim, **characterised in that** said facial features around the mouth include the region around the lips, cheeks and nose.

4. A method as claimed in any preceding claim, **characterised in that** said number of points around the mouth amount to at least ten points.

5. A method as claimed in claim 2, **characterised in that** the transformation is a linear function which describes a difference for a measurement point as a function of acoustic parameters

6. A method as claimed in claim 2, or claim 5, **characterised in that** said acoustic parameters are statistically estimated from known data using multiple linear regression techniques.

7. A method as claimed in any preceding claim, **characterised in that** the constituent elemental units resulting from analysis of said acoustic speech signal(s) are in the form of a series of phones representative of vowels and consonants.

8. A method as claimed in any preceding claim, **characterised by** the step of estimating said acoustic parameters every 20 milliseconds (50 Hz).

9. Apparatus for providing real-time visual representations of a speaker's facial movements, associated with an acoustic speech signal delivered by the speaker, including:
- a display unit for displaying said visual representations;
- means for analyzing the acoustic speech signal to identify its constituent elemental speech units;
- generation means for generating and displaying, on said display unit, an image of moving human facial features, said facial feature movements being substantially synchronized, in real time, to said constituent elemental speech units,
**characterised in that** said apparatus is adapted to displaying, on the display screen, a series of movement patterns for respective constituent elemental units of the acoustic speech signal, each of said movement patterns being:
- indicative of movement, in three-dimensions, of a number of points around the mouth of the speaker; and
- substantially synchronized, in real time, to a respective constituent elemental speech unit, said generation means include:
- storage means for storing a visual representation of human facial features, including at least the mouth, together with information indicative of a normal position of a number of points around the mouth;
- analyzing means for analyzing acoustic speech signals to identify the related acoustic parameters that define said constituent elemental speech units; measurement means for making three-dimensional measurements, at each of said number of points around the mouth of a speaker, for each of the identified acoustic parameters;
- comparison means for comparing, for each of said acoustic parameters, the measured and normal positions for each of said number of points around the mouth to determine a positional difference, in three-dimensions, at each of said number of points for a respective acoustic parameter;
- and transformation means for establishing a movement pattern for said number of points around the mouth for each of said acoustic parameters, said movement pattern being a transformation from said acoustic parameters to the differences, in three-dimensions, between the measured and normal positions of each of said number of points.

10. Apparatus for providing real-time visual representations of a speaker's facial movements, associated with an acoustic speech signal delivered by the speaker, including
- a display unit for displaying said visual representations;
- means for analyzing the acoustic speech signal to identify its constituent elemental speech units;
- generation means for generating and displaying, on said display unit, an image of moving human facial features, said facial feature movements being substantially synchronized, in real time, to said constituent elemental speech units,
**characterised in that** said generation means include means for generating a series of facial movement patterns for the constituent elemental units of acoustic speech signals for display on the screen, each of said movement patterns being indicative of movement, in three-dimensions, of a number of points around the mouth of a speaker for a respective constituent elemental speech unit, and **in that** said apparatus includes storage means for storing said series of facial movement patterns, said generation means include:
- storage means for storing a visual representation of human facial features, including at least the mouth, together with information indicative of a normal position of a number of points around the mouth;
- analyzing means for analyzing acoustic speech signals to identify the related acoustic parameters that define said constituent elemental speech units; measurement means for making three-dimensional measurements, at each of said number of points around the mouth of a speaker, for each of the identified acoustic parameters;
- comparison means for comparing, for each of said acoustic parameters, the measured and normal positions for each of said number of points around the mouth to determine a positional difference, in three-dimensions, at each of said number of points for a respective acoustic parameter;
- and transformation means for establishing a movement pattern for said number of points around the mouth for each of said acoustic parameters, said movement pattern being a transformation from said acoustic parameters to the differences, in three-dimensions, between the measured and normal positions of each of said number of points.

11. Apparatus as claimed in claim 9, or claim 10, **characterised in that** said apparatus includes retrieval means, responsive to the identification of each of the constituent elemental units of the acoustic speech signal delivered by the speaker, to retrieve a respective stored movement pattern for display on said display unit.

12. Apparatus as claimed in any of claims 9 to 12, **characterised in that** said facial features around the mouth including the region around the lips, cheeks and nose.

13. Apparatus as claimed in any of claims 9 to 12, **characterised in that** said number of points around the mouth amount to at least ten points.

14. Apparatus as claimed in claim 13, **characterised in that** each of said transformations established by said transformation means is a linear function which describes a difference for a measured point as a function of acoustic parameters.

15. Apparatus as claimed in claim 13, or claim 14, **characterised in that** said analyzing means are adapted to statistically estimate said acoustic parameters from known data using multiple linear regression techniques.

16. Apparatus as claimed in any of claims 9 to 15, **characterised in that** the constituent elemental units resulting from analysis of said acoustic speech signal(s) are in the form of a series of phones representative of vowels and consonants.

17. Apparatus as claimed in any of claims 9 to 16, **characterised in that** said acoustic parameters are estimated every 20 milliseconds (50 Hz).

18. A telecommunication system including a plurality a telephone handsets and switching means adapted to interconnect any two, or more, of said telephone handsets, **characterised in that** said system includes apparatus, as claimed in any of claims 9 to 17, for providing an enhanced understanding of acoustic speech signals for users of said telephone handsets who have impaired hearing and a lip reading skill.

19. A telecommunication system as claimed in claim 18, **characterised in that** each of said telephone handsets is adapted to be connected to, or be integral with, said apparatus, **in that** the display unit of said apparatus is adapted to display facial movement patterns in synchronism with receipt of respective constituent elemental units of an acoustic speech signal received by a respective telephone handset, and **in that** said facial movement display enables a handset user to comprehend a substantial part of the content of said acoustic speech signal through lid reading of the facial movements.

## Patentansprüche

1. Verfahren zur Schaffung von visuellen Darstellungen in Echtzeit der Gesichtsbewegungen eines Sprechers, die einem vom Sprecher abgegebenen akustischen Sprachsignal zugeordnet sind, mit den Schritten:
- Analysieren des akustischen Sprachsignals zur Identifizierung seiner konstitutierenden elementaren Spracheinheiten;
- Erzeugen und Darstellen auf einem Displayschirm eines Bildes von sich bewegenden menschlichen Gesichtszügen, wobei die Gesichtsbewegungen im wesentlichen in Echtzeit mit den konstituierenden elementaren Spracheinheiten synchronisiert sind;
wobei das Verfahren **gekennzeichnet ist durch** den Schritt des Darstellens auf dem Displayschirm einer Serie von Bewegungsmustern für jeweilige konstituierende elementare Einheiten des akustischen Sprachsignals, wobei die Bewegungsmuster
- repräsentativ sind für die Bewegung in drei Dimensionen einer Anzahl von Punkten um den Mund des Sprechers herum; und
- im wesentlichen in Echtzeit mit einer jeweiligen konstituierenden elementaren Spracheinheit synchronisiert sind,
und **durch** den Schritt des Abrufens, aufgrund der Identifizierung jeder der konstituierenden elementaren Einheiten des vom Sprecher abgegebenen akustischen Sprachsignals, eines jeweiligen gespeicherten Bewegungsmusters für die Darstellung, wobei die Erzeugung der Serie von Gesichtsbewegungsmustern die folgenden Schritte umfaßt:
- Speichern einer visuellen Darstellung von menschlichen Gesichtszügen, einschließlich mindestens des Mundes, zusammen mit Information, die eine Normalposition einer Anzahl von Punkten um den Mund herum angibt;
- Analysieren von akustischen Sprachsignalen zur Identifizierung der zugeordneten akustischen Parameter, die die konstituierenden elementaren Spracheinheiten definieren;
- Durchführung von dreidimensionalen Messungen für jeden der identifizierten akustischen Parameter, an jedem der Anzahl von Punkten um den Mund eines Sprechers herum für jeden der identifizierten akustischen Parameter;
- Vergleichen, für jeden der akustischen Parameter, der gemessenen Positionen und der Normalpositionen für jeden der Anzahl von Punkten rund um den Mund herum, zum Bestimmen einer Positionsdifferenz in drei Dimensionen an jedem der Anzahl von Punkten für einen jeweiligen akustischen Parameter;
- Erstellen eines Bewegungsmusters für die Anzahl von Punkten um den Mund herum für jeden der akustischen Parameter, wobei das Bewegungsmuster eine Transformation von den akustischen Parametern zu den dreidimensionalen Differenzen zwischen den gemessenen und normalen Positionen an jedem der Anzahl von Punkten ist; und
- Speichern der Bewegungsmuster für jeden der akustischen Parameter.

2. Verfahren zur Schaffung von visuellen Darstellungen in Echtzeit der Gesichtsbewegungen eines Sprechers, die einem vom Sprecher abgegebenen akustischen Sprachsignal zugeordnet sind, mit den Schritten:
- Analysieren des akustischen Sprachsignals zur Identifizierung seiner konstitutierenden elementaren Spracheinheiten;
- Erzeugen und Darstellen auf einem Displayschirm eines Bildes von sich bewegenden menschlichen Gesichtszügen, wobei die Gesichtsbewegungen im wesentlichen in Echtzeit mit den konstituierenden elementaren Spracheinheiten synchronisiert sind;
wobei das Verfahren **gekennzeichnet ist durch** den Schritt des Erzeugens und Speicherns einer Serie von Bewegungsmustern für die konstituierenden elementaren Einheiten von akustischen Sprachsignalen für die Darstellung auf dem Displayschirm, wobei jedes der Bewegungsmuster repräsentativ ist für die Bewegung in drei Dimensionen einer Anzahl von Punkten um den Mund des Sprechers herum für eine jeweilige konstituierende elementare Spracheinheit,
und **durch** den Schritt des Abrufens, aufgrund der Identifizierung jeder der konstituierenden elementaren Einheiten des vom Sprecher abgegebenen akustischen Sprachsignals, eines jeweiligen gespeicherten Bewegungsmusters für die Darstellung, wobei die Erzeugung der Serie von Gesichtsbewegungsmustern, die folgenden Schritte umfaßt:
- Speichern einer visuellen Darstellung von menschlichen Gesichtszügen, einschließlich mindestens des Mundes, zusammen mit Information, die eine Normalposition einer Anzahl von Punkten um den Mund herum angibt;
- Analysieren von akustischen Sprachsignalen zur Identifizierung der zugeordneten akustischen Parameter, die die konstituierenden elementaren Spracheinheiten definieren;
- Durchführung von dreidimensionalen Messungen für jeden der identifizierten akustischen Parameter, an jedem der Anzahl von Punkten um den Mund eines Sprechers herum für jeden der identifizierten akustischen Parameter;
- Vergleichen, für jeden der akustischen Parameter, der gemessenen Positionen und der Normalpositionen für jeden der Anzahl von Punkten rund um den Mund herum, zum Bestimmen einer Positionsdifferenz in drei Dimensionen an jedem der Anzahl von Punkten für einen jeweiligen akustischen Parameter;
- Erstellen eines Bewegungsmusters für die Anzahl von Punkten um den Mund herum für jeden der akustischen Parameter, wobei das Bewegungsmuster eine Transformation von den akustischen Parametern zu den dreidimensionalen Differenzen zwischen den gemessenen und normalen Positionen an jedem der Anzahl von Punkten ist; und
- Speichern der Bewegungsmuster für jeden der akustischen Parameter.

3. Verfahren nach einem vorangehenden Anspruch, **dadurch gekennzeichnet, daß** die Gesichtszüge um den Mund herum den Bereich um die Lippen, Wangen und Nase beinhalten.

4. Verfahren nach einem vorangehenden Anspruch, **dadurch gekennzeichnet, daß** die Anzahl von Punkten um den Mund herum mindestens 10 Punkte beträgt.

5. Verfahren nach Anspruch 2, **dadurch gekennzeichnet, daß** die Transformation eine lineare Funktion ist, die eine Differenz für einen Meßpunkt als eine Funktion von akustischen Parametern beschreibt.

6. Verfahren nach Anspruch 2 oder 5, **dadurch gekennzeichnet, daß** die akustischen Parameter statistisch aus bekannten Daten geschätzt werden unter Verwendung von mehrfachen linearen Regressionsverfahren.

7. Verfahren nach einem vorangehenden Anspruch, **dadurch gekennzeichnet, daß** die sich aus der Analyse des (der) akustischen Sprachsignale(s) ergebenden konstituierenden elementaren Einheiten die Form einer Serie von Phonen haben, die für Vokale und Konsonanten repräsentativ sind.

8. Verfahren nach einem vorangehenden Anspruch, **gekennzeichnet durch** den Schritt des Schätzens der akustischen Parameter alle 20 Millisekunden (50Hz).

9. Vorrichtung zur Schaffung von visuellen Darstellungen in Echtzeit der Gesichtsbewegungen eines Sprechers, die einem vom Sprecher abgegebenen akustischen Sprachsignal zugeordnet sind, mit:
- einer Displayeinheit zum Anzeigen der visuellen Darstellungen;
- Mitteln zum Analysieren des akustischen Sprachsignals zur Identifizierung seiner konstitutierenden elementaren Spracheinheiten;
- Generiermittlen zum Erzeugen und Darstellen, auf der Displayeinheit eines Bildes von sich bewegenden menschlichen Gesichtszügen, wobei die Gesichtsbewegungen im wesentlichen in Echtzeit mit den konstituierenden elementaren Spracheinheiten synchronisiert sind;
**dadurch gekennzeichnet, daß** die Vorrichtung angepaßt ist für das Darstellen, auf dem Displayschirm, einer Serie von Bewegungsmustern für jeweilige konstituierende elementare Einheiten des akustischen Sprachsignals, wobei jedes der Bewegungsmuster
- repräsentativ ist für die Bewegung in drei Dimensionen einer Anzahl von Punkten um den Mund des Sprechers herum; und
- im wesentlichen in Echtzeit mit einer jeweiligen konstituierenden elementaren Spracheinheit synchronisiert ist,
und daß die Generiermittel enthalten:
- Speichermittel zum Speichern einer visuellen Darstellung von menschlichen Gesichtszügen, einschließlich mindestens des Mundes, zusammen mit Information, die eine Normalposition einer Anzahl von Punkten um den Mund herum angibt;
- Analysiermitel zum Analysieren von akustischen Sprachsignalen zur Identifizierung der zugeordneten akustischen Parameter, die die konstituierenden elementaren Spracheinheiten definieren; Meßmittel zur Durchführung von dreidimensionalen Messungen an jedem der Anzahl von Punkten um den Mund eines Sprechers herum für jeden der identifizierten akustischen Parameter;
- Vergleichsmittel zum Vergleichen, für jeden der akustischen Parameter, der gemessenen Positionen und der Normalpositionen für jeden der Anzahl von Punkten rund um den Mund herum, zum Bestimmen einer Positionsdifferenz in drei Dimensionen an jedem der Anzahl von Punkten für einen jeweiligen akustischen Parameter;
- und Transformationsmittel zum Erstellen eines Bewegungsmusters für die Anzahl von Punkten um den Mund herum für jeden der akustischen Parameter, wobei das Bewegungsmuster eine Transformation von den akustischen Parametern zu den dreidimensionalen Differenzen zwischen den gemessenen und normalen Positionen an jedem der Anzahl von Punkten ist.

10. Vorrichtung zur Schaffung von visuellen Darstellungen in Echtzeit der Gesichtsbewegungen eines Sprechers, die einem vom Sprecher abgegebenen akustischen Sprachsignal zugeordnet sind, mit:
- einer Displayeinheit zum Anzeigen der visuellen Darstellungen;
- Mitteln zum Analysieren des akustischen Sprachsignals zur Identifizierung seiner konstitutierenden elementaren Spracheinheiten;
- Generiermittlen zum Erzeugen und Darstellen, auf der Displayeinheit eines Bildes von sich bewegenden menschlichen Gesichtszügen, wobei die Gesichtsbewegungen im wesentlichen in Echtzeit mit den konstituierenden elementaren Spracheinheiten synchronisiert sind;
**dadurch gekennzeichnet, daß** die Generiermittel Mittel aufweisen zum Erzeugen einer Serie von Bewegungsmustern für die konstituierenden elementaren Einheiten des akustischen Sprachsignals für die Darstellung auf dem Schirm, wobei die Bewegungsmuster repräsentativ sind für die Bewegung in drei Dimensionen einer Anzahl von Punkten um den Mund des Sprechers herum für eine jeweilige konstituierende elementare Spracheinheit, und daß die Vorrichtung Speichermittel umfaßt zum Speichern der Serie von Gesichtsbewegungen, wobei die Generiermittel umfassen:
- Speichermittel zum Speichern einer visuellen Darstellung von menschlichen Gesichtszügen, einschließlich mindestens des Mundes, zusammen mit Information, die eine Normalposition einer Anzahl von Punkten um den Mund herum angibt;
- Analysiermitel zum Analysieren von akustischen Sprachsignalen zur Identifizierung der zugeordneten akustischen Parameter, die die konstituierenden elementaren Spracheinheiten definieren; Meßmittel zur Durchführung von dreidimensionalen Messungen an jedem der Anzahl von Punkten um den Mund eines Sprechers herum für jeden der identifizierten akustischen Parameter;
- Vergleichsmittel zum Vergleichen, für jeden der akustischen Parameter, der gemessenen Positionen und der Normalpositionen für jeden der Anzahl von Punkten rund um den Mund herum, zum Bestimmen einer Positionsdifferenz in drei Dimensionen an jedem der Anzahl von Punkten für einen jeweiligen akustischen Parameter;
- und Transformationsmittel zum Erstellen eines Bewegungsmusters für die Anzahl von Punkten um den Mund herum für jeden der akustischen Parameter, wobei das Bewegungsmuster eine Transformation von den akustischen Parametern zu den dreidimensionalen Differenzen zwischen den gemessenen und normalen Positionen an jedem der Anzahl von Punkten ist.

11. Vorrichtung nach Anspruch 9 oder 10, **dadurch gekennzeichnet, daß** die Vorrichtung Abrufmittel aufweist, die aufgrund der Identifizierung jeder der konstutierenden elementaren Einheiten des vom Speicher abgegebenen akustischen Sprachsignals ein jeweiliges gespeichertes Bewegungsmuster für die Darstellung auf der Displayeinheit abrufen.

12. Vorrichtung nach einem der Ansprüche 9 bis 12, **dadurch gekennzeichnet, daß** die Gesichtszüge um den Mund herum den Bereich um die Lippen, Wangen und Nase beinhalten.

13. Vorrichtung nach einem der Ansprüche 9 bis 12, **dadurch gekennzeichnet, daß** die Anzahl von Punkten um den Mund herum mindestens 10 Punkte beträgt.

14. Vorrichtung nach Anspruch 13, **dadurch gekennzeichnet, daß** die Transformation eine lineare Funktion ist, die eine Differenz für einen Meßpunkt als eine Funktion von akustischen Parametern beschreibt.

15. Vorrichtung nach Anspruch 13 oder 14, **dadurch gekennzeichnet, daß** die Analysiermittel dafür angepaßt sind, die akustischen Parameter aus bekannten Daten unter Verwendung von mehrfachen linearen Regressionsverfahren statistisch zu schätzen.

16. Vorrichtung nach einem der Ansprüche 9 bis 15, **dadurch gekennzeichnet, daß** die sich aus der Analyse des (der) akustischen Sprachsignale(s) ergebenden konstituierenden elementaren Einheiten die Form einer Serie von Phonen haben, die für Vokale und Konsonanten repräsentativ sind.

17. Vorrichtung nach einem der Ansprüche 9 bis 16, **gekennzeichnet durch** den Schritt des Schätzens der akustischen Parameter alle 20 Millisekunden (50Hz).

18. Telekommunikationssystem mit einer Mehrzahl von Telefonhandgeräten und Schalteinrichtungen zum Verbinden von zwei oder mehr der Telefonhandgeräten, **dadurch gekennzeichnet, daß** das System eine Vorrichtung nach einem der Ansprüche 9 bis 17 enthält zum Schaffen einer verbesserten Verständnismöglichkeit von akustischen Sprachsignalen für Benutzer der Telefonhandgeräte, die hörbehindert sind und das Lippenlesen beherrschen.

19. Telekommunikationssystem nach Anspruch 18, **dadurch gekennzeichnet, daß** jedes der Telefonhandgeräte mit der Vorrichtung verbindbar oder mit ihr integriert ist, daß die Displayeinheit der Vorrichtung dazu angepaßt ist, Gesichtsbewegungsmuster synchron mit dem Empfang von entsprechenden konstituierenden elementaren Einheiten eines akustischen Sprachsignals, das von einem jeweiligen Telefonhandgerät empfangen wird, darzustellen, und daß die Gesichtsbewegungsdarstellung einen Benutzer des Handgerätes in die Lage versetzt, einen wesentlichen Teil des Inhaltes des akustischen Sprachsignals durch das Lippenlesen der Gesichtsbewegungen zu verstehen.

## Revendications

1. Procédé pour fournir des représentations visuelles en temps réel des mouvements faciaux d'un orateur, associées à un signal vocal acoustique délivré par l'orateur, comprenant les étapes consistant à :
analyser le signal vocal acoustique pour identifier ses unités vocales élémentaires constitutives ;
générer et afficher, sur un écran d'affichage, une image de traits faciaux humains en mouvement, lesdits mouvements de traits faciaux étant sensiblement synchronisés, en temps réel, auxdites unités vocales élémentaires constitutives ;
ledit procédé étant **caractérisé par** l'étape consistant à afficher, sur l'écran d'affichage, une série de patrons de mouvement pour des unités élémentaires constitutives respectives du signal vocal acoustique, chacun desdits patrons de mouvement étant :
indicatif du mouvement, en trois dimensions, d'un certain nombre de points autour de la bouche de l'orateur ; et
sensiblement synchronisé, en temps réel, à une unité vocale élémentaire constitutive respective, et l'étape consistant à récupérer, en réponse à l'identification de chacune des unités élémentaires constitutives du signal vocal acoustique délivré par l'orateur, un patron de mouvement stocké respectif pour affichage, la génération de ladite série de patrons de mouvements faciaux comprenant les étapes consistant à :
stocker une représentation visuelle de traits faciaux humains, comprenant au moins la bouche, conjointement avec des informations indicatives d'une position normale d'un certain nombre de points autour de la bouche ;
analyser les signaux vocaux acoustiques pour identifier les paramètres acoustiques associés qui définissent lesdites unités vocales élémentaires constitutives ;
effectuer des mesures tridimensionnelles, au niveau de chacun desdits nombres de points autour de la bouche de l'orateur, pour chacun des paramètres acoustiques identifiés ;
comparer, pour chacun desdits paramètres acoustiques, les positions normales et mesurées pour chacun desdits nombres de points autour de la bouche afin de déterminer une différence de position, en trois dimensions, au niveau de chacun desdits nombres de points pour un paramètre acoustique respectif ;
établir un patron de mouvement pour ledit nombre de points autour de la bouche pour chacun desdits paramètres acoustiques, ledit patron de mouvement étant une transformation desdits paramètres acoustiques en différences, en trois dimensions, entre les positions normales et mesurées de chacun desdits nombres de points ; et
stocker les patrons de mouvement pour chacun desdits paramètres acoustiques.

2. Procédé pour fournir des représentations visuelles en temps réel des mouvements faciaux d'un orateur, associées à un signal vocal acoustique délivré par l'orateur, comprenant les étapes consistant à :
analyser le signal vocal acoustique pour identifier ses unités vocales élémentaires constitutives ;
générer et afficher, sur un écran d'affichage, une image de traits faciaux humains en mouvement, lesdits mouvements de traits faciaux étant sensiblement synchronisés, en temps réel, auxdites unités vocales élémentaires constitutives ;
ledit procédé étant **caractérisé par** les étapes consistant à générer et à stocker une série de patrons de mouvements faciaux pour les unités élémentaires constitutives des signaux vocaux acoustiques pour affichage sur l'écran d'affichage, chacun desdits patrons de mouvement étant indicatif du mouvement, en trois dimensions, d'un certain nombre de points autour de la bouche d'un orateur pour une unité vocale élémentaire constitutive respective et l'étape consistant à récupérer, en réponse à l'identification de chacune des unités élémentaires constitutives du signal vocal acoustique délivré par l'orateur, un patron de mouvement stocké respectif pour affichage, la génération de ladite série de patrons de mouvements faciaux comprenant les étapes consistant à :
stocker une représentation visuelle de traits faciaux humains, comprenant au moins la bouche, conjointement avec des informations indicatives d'une position normale d'un certain nombre de points autour de la bouche ;
analyser des signaux vocaux acoustiques pour identifier les paramètres acoustiques associés qui définissent lesdites unités vocales élémentaires constitutives ;
effectuer des mesures tridimensionnelles, au niveau de chacun desdits nombres de points autour de la bouche d'un orateur, pour chacun des paramètres acoustiques identifiés ;
comparer, pour chacun desdits paramètres acoustiques, les positions normales et mesurées pour chacun desdits nombres de points autour de la bouche afin de déterminer une différence de position, en trois dimensions, au niveau de chacun desdits nombres de points pour un paramètre acoustique respectif ;
établir un patron de mouvement pour ledit nombre de points autour de la bouche pour chacun desdits paramètres acoustiques, ledit patron de mouvement étant une transformation desdits paramètres acoustiques en différences, en trois dimensions, entre les positions normales et mesurées de chacun desdits nombres de points ; et
stocker les patrons de mouvement pour chacun desdits paramètres acoustiques.

3. Procédé selon l'une quelconque des revendications précédentes, **caractérisé en ce que** lesdits traits faciaux autour de la bouche comprennent la région autour des lèvres, des joues et du nez.

4. Procédé selon l'une quelconque des revendications précédentes, **caractérisé en ce que** ledit nombre de points autour de la bouche s'élève à au moins dix points.

5. Procédé selon la revendication 2, **caractérisé en ce que** la transformation est une fonction linéaire qui décrit une différence pour un point de mesure en tant que fonction des paramètres acoustiques.

6. Procédé selon la revendication 2 ou la revendication 5, **caractérisé en ce que** lesdits paramètres acoustiques sont estimés de manière statistique à partir de données connues en utilisant des techniques de régression linéaire multiple.

7. Procédé selon l'une quelconque des revendications précédentes, **caractérisé en ce que** les unités élémentaires constitutives résultant de l'analyse dudit ou desdits signaux vocaux acoustiques se présentent sous la forme d'une série de phones représentatifs de voyelles et de consonnes.

8. Procédé selon l'une quelconque des revendications précédentes, **caractérisé par** l'étape consistant à estimer lesdits paramètres acoustiques toutes les 20 millisecondes (50 Hz).

9. Appareil pour fournir des représentations visuelles en temps réel de mouvements faciaux d'un orateur, associées à un signal vocal acoustique délivré par l'orateur, comprenant :
une unité d'affichage pour afficher lesdites représentations visuelles ;
des moyens pour analyser le signal vocal acoustique afin d'identifier ses unités vocales élémentaires constitutives ;
des moyens de génération pour générer et afficher, sur ladite unité d'affichage, une image de traits faciaux humains en mouvement, lesdits mouvements de traits faciaux étant sensiblement synchronisés, en temps réel, auxdites unités vocales élémentaires constitutives,
**caractérisé en ce que** ledit appareil est adapté pour afficher, sur l'écran d'affichage, une série de patrons de mouvement pour des unités élémentaires constitutives respectives du signal vocal acoustique, chacun desdits patrons de mouvement étant :
indicatif du mouvement, en trois dimensions, d'un certain nombre de points autour de la bouche de l'orateur ; et
sensiblement synchronisé, en temps réel, à une unité vocale élémentaire constitutive respective, lesdits moyens de génération comprenant :
des moyens de stockage pour stocker une représentation visuelle de traits faciaux humains, comprenant au moins la bouche, conjointement avec des informations indicatrices d'une position normale d'un certain nombre de points autour de la bouche ;
des moyens d'analyse pour analyser des signaux vocaux acoustiques afin d'identifier les paramètres acoustiques associés qui définissent lesdites unités vocales élémentaires constitutives ; des moyens de mesure pour effectuer des mesures tridimensionnelles, au niveau de chacun desdits nombres de points autour de la bouche d'un orateur, pour chacun des paramètres acoustiques identifiés ;
des moyens de comparaison pour comparer, pour chacun desdits paramètres acoustiques, les positions normales et mesurées pour chacun desdits nombres de points autour de la bouche afin de déterminer une différence de position, en trois dimensions, au niveau de chacun desdits nombres de points pour un paramètre acoustique respectif ;
et des moyens de transformation pour établir un patron de mouvement pour ledit nombre de points autour de la bouche pour chacun desdits paramètres acoustiques, ledit patron de mouvement étant une transformation desdits paramètres acoustiques en différences, en trois dimensions, entre les positions normales et mesurées de chacun desdits nombres de points.

10. Appareil pour fournir des représentations visuelles en temps réel des mouvements faciaux d'un orateur, associées à un signal vocal acoustique délivré par l'orateur, comprenant :
une unité d'affichage pour afficher lesdites représentations visuelles ;
des moyens pour analyser le signal vocal acoustique afin d'identifier ses unités vocales élémentaires constitutives ;
des moyens de génération pour générer et afficher, sur ladite unité d'affichage, une image de traits faciaux humains en mouvement, lesdits mouvements de traits faciaux étant sensiblement synchronisés, en temps réel, auxdites unités vocales élémentaires constitutives,
**caractérisé en ce que** lesdits moyens de génération comprennent des moyens pour générer une série de patrons de mouvements faciaux pour les unités élémentaires constitutives de signaux vocaux acoustiques pour affichage sur l'écran, chacun desdits patrons de mouvement étant indicatif du mouvement, en trois dimensions, d'un certain nombre de points autour de la bouche d'un orateur pour une unité vocale élémentaire constitutive respective, et **en ce que** ledit appareil comprend des moyens de stockage pour stocker ladite série de patrons de mouvements faciaux, lesdits moyens de génération comprenant :
des moyens de stockage pour stocker une représentation visuelle de traits faciaux humains, comprenant au moins la bouche, conjointement avec des informations indicatives d'une position normale d'un certain nombre de points autour de la bouche ;
des moyens d'analyse pour analyser des signaux vocaux acoustiques afin d'identifier les paramètres acoustiques associés qui définissent lesdites unités vocales élémentaires constitutives ; des moyens de mesure pour effectuer des mesures tridimensionnelles, au niveau de chacun desdits nombres de points autour de la bouche d'un orateur, pour chacun des paramètres acoustiques identifiés ;
des moyens de comparaison pour comparer, pour chacun desdits paramètres acoustiques, les positions normales et mesurées pour chacun desdits nombres de points autour de la bouche afin de déterminer une différence de position, en trois dimensions, au niveau de chacun desdits nombres de points pour un paramètre acoustique respectif ;
et des moyens de transformation pour établir un patron de mouvement pour ledit nombre de points autour de la bouche pour chacun desdits paramètres acoustiques, ledit patron de mouvement étant une transformation desdits paramètres acoustiques en différences, en trois dimensions, entre les positions normales et mesurées de chacun desdits nombres de points.

11. Appareil selon la revendication 9 ou la revendication 10, **caractérisé en ce que** ledit appareil comprend des moyens de récupération répondant à l'identification de chacune des unités élémentaires constitutives du signal vocal acoustique délivré par l'orateur, pour récupérer un patron de mouvement stocké respectif en vue d'affichage sur ladite unité d'affichage.

12. Appareil selon l'une quelconque des revendications 9 à 12, **caractérisé en ce que** lesdits traits faciaux autour de la bouche comprennent la région autour des lèvres, des joues et du nez.

13. Appareil selon l'une quelconque des revendications 9 à 12, **caractérisé en ce que** ledit nombre de points autour de la bouche s'élève à au moins dix points.

14. Appareil selon la revendication 13, **caractérisé en ce que** chacune desdites transformations établies par lesdits moyens de transformation est une fonction linéaire qui décrit une différence pour un point mesuré en tant que fonction de paramètres acoustiques.

15. Appareil selon la revendication 13 ou la revendication 14, **caractérisé en ce que** lesdits moyens d'analyse sont adaptés pour estimer statistiquement lesdits paramètres acoustiques à partir de données connues en utilisant des techniques de régression linéaire multiple.

16. Appareil selon l'une quelconque des revendications 9 à 15, **caractérisé en ce que** les unités élémentaires constitutives résultant de l'analyse dudit ou desdits signaux vocaux acoustiques se présentent sous la forme d'une série de phones représentatifs de voyelles et de consonnes.

17. Appareil selon l'une quelconque des revendications 9 à 16, **caractérisé en ce que** lesdits paramètres acoustiques sont estimés toutes les 20 millisecondes (50 Hz).

18. Système de télécommunications comprenant une pluralité de postes de téléphone et des moyens de commutation adaptés pour interconnecter n'importe lequel parmi deux desdits postes de téléphone ou plus, **caractérisé en ce que** ledit système comprend l'appareil selon l'une quelconque des revendications 9 à 17, pour fournir une compréhension améliorée de signaux vocaux acoustiques pour des utilisateurs desdits postes de téléphone présentant une insuffisance auditive et capables de lire sur les lèvres.

19. Système de télécommunications selon la revendication 18, **caractérisé en ce que** chacun desdits postes de téléphone est adapté pour être connecté à, ou faire partie intégrante dudit appareil, **en ce que** l'unité d'affichage dudit appareil est adaptée pour afficher des patrons de mouvements faciaux en synchronisation avec la réception d'unités élémentaires constitutives respectives d'un signal vocal acoustique reçu par un poste de téléphone respectif, et **en ce que** ledit affichage de mouvements faciaux permet à un utilisateur de poste de téléphone de comprendre une grande partie du contenu dudit signal vocal acoustique grâce à la lecture labiale des mouvements faciaux.
